# EUROPÄISCHE PATENTSCHRIFT

(11) **EP 3 437 724 B1**
(45) Veröffentlichungstag und Bekanntmachung des Hinweises auf die Patenterteilung: **22.04.2026**
(21) Anmeldenummer: 18000036.6
(22) Anmeldetag: 16.01.2018
(51) Int. Cl.: B01D 63/08

(54) **VORRICHTUNG ZUM FILTERN UND TRENNEN VON STRÖMUNGSMEDIEN**
DEVICE FOR FILTERING AND SEPARATING FLOW MEDIA
DISPOSITIF DE FILTRAGE ET DE SÉPARATION DE MILIEUX FLUIDES

(30) Priorität: 01.08.2017 EP 17001315
(43) Veröffentlichungstag der Anmeldung: 06.02.2019
(73) Patentinhaber: R.T.S. ROCHEM Technical Services GmbH, 20539 Hamburg (DE)
(72) Erfinder: Wilhem, Heine, 21077 Hamburg (DE)
(74) Vertreter: VKK Patentanwälte PartG mbB

(56) Entgegenhaltungen:
- EP-A1- 0 289 740
- EP-A1- 2 962 745
- EP-B1- 0 289 740
- DE-A1- 102005 026 190
- DE-C1- 19 536 560

## Beschreibung

Die Erfindung betrifft eine Vorrichtung zum Filtern und Trennen von Strömungsmedien durch Umkehrosmose und Ultrafiltration, umfassend eine Mehrzahl stapelförmig aufeinandergestapelter Abstandselemente, wobei jeweils zwischen den im wesentlichen scheibenförmig ausgebildeten, mit einem zentralen Loch versehenen Abstandselementen, die das Strömungsmedium führend leiten und vom Strömungsmedium umschlossen werden, ein Filterelement eingeschlossen ist, sowie einen zentralen Spannbolzen, der den Abstandselementenstapel, der beidseitig jeweils von je einem ersten und einem zweiten inneren Endelement und je einem ersten und einem zweiten äußeren Endelement begrenzt ist, als Einheit zusammenhält, wobei die Einheit druckdicht in einem Gehäuse aufgenommen wird.

Eine Vorrichtung dieser Art ist bekannt (EP-B-0 289 7409. Vorrichtungen dieser Art sind seit langem bekannt und werden für die verschiedensten Trennaufgaben nicht nur zur Trennung von flüssigen Strömungsmedien sondern bspw. auch zur der Gastrennung benutzt, wobei diese Vorrichtungen, ob nun zur Trennung flüssiger Medien oder zur Trennung gasförmiger Medien, mehr oder weniger den Aufbau haben, wie sie für die hier beschriebene Vorrichtung mit ihren wesentlichen konstruktiven Merkmalen skizziert ist. Weitere Vorrichtungen dieser Art sind in DE19536560C1 und DE102005026190A1 beschrieben.

Ein Charakteristikum dieser Vorrichtungen ist, daß sie regelmäßig in hintereinander und/oder nebeneinander angeordneten Batterien zusammengestellt bzw. verknüpft werden, um in Anpassung an die jeweilige Trennaufgabe mit großem Wirkungsgrad, d.h. großer Effizienz, die jeweils spezifizierte Trennaufgabe zu erfüllen. Bspw. werden derartige Vorrichtungen zur Seewasseraufbereitung, d.h. zur Erzeugung von Trinkwasser aus Seewasser oder zur Erzeugung von Bewässerungswasser für Pflanzen und Pflanzenplantagen, zur Aufbereitung von Abwasser, was im industriellen Bereich aber auch im privaten Bereich anfällt und auch bspw. zur Reinigung von Sickerwasser benutzt, das bspw. auf dem Grund bzw. Randbereich von Mülldeponien anfällt. Allen diesen vorbeschriebenen beispielhaft aufgeführten Anwendungen ist eines gemein, daß generell die Notwendigkeit besteht, daß diese Vorrichtungen mit hoher Sicherheit im Sinne eines zuverlässigen Betriebes und dabei regelmäßig wartungsfrei arbeiten können müssen, denn das konstruktive Prinzip dieser Vorrichtungen läßt eine Reparatur bei erkanntem Defekt nur mittels einer sehr aufwendigen Demontage, den Austausch der defekten Elemente und einem Zusammenbau der Elemente zu. Oberste Forderungen an derartige Vorrichtungen ist somit die Sicherstellung eines defekt- und wartungsfreien Betriebes über lange Zeiträume sicherstellen zu können und diese Forderungen an derartige Vorrichtungen nicht mit hohen Gestehungskosten derartiger Vorrichtungen zu erkaufen.

Um diese Forderungen, nämlich hohe Betriebs- bzw. Funktionssicherheit, hohe Wartungsfreiheit und geringe Gestehungskosten, sind, wie der Fachwelt bekannt, hier stark gegenläufige Parameter, was sich auch bei den im übrigen im Stand der Technik bekannten Vorrichtungen und nicht nur bei der gattungsgemäßen Vorrichtung deutlich zeigt. Hinzu kommt noch, daß für bestimmte Anwendungsfäle das mit der Vorrichtung zu erzeugende Zielprodukt, das regelmäßig als Permeat die Vorrichtung verläßt, bisweilen aber auch als Retentat, mit hoher Reinheit zur Verfügung gestellt werden muß und durch den eigentlichen Trennvorgang des zu trennenden Mediums in der Vorrichtung nicht mit Fremdstoffen kontaminiert wird, der das Zielprodukt im Hinblick auf die geforderte Güte beeinträchtigt bzw. die geforderte hohe Reinheit des Zielstoffes nicht gewährleisten kann.

Aus diesem Grunde sind diese Vorrichtung im Hinblick auf die konstruktive Ausgestaltung und im Hinblick auf die für den konstruktiven Aufbau der Vorrichtung verwendeten Werkstoffe nur sehr aufwendig, d.h. lediglich unter hohen Gestehungskosten realisierbar, was die Folge hat, daß derartige Vorrichtungen, obwohl sie sich dafür grundsätzlich hervorragend eignen würden, für bestimmte Trennaufgaben nicht herangezogen werden und somit vielfach auf die an sich ineffektive thermische Trennung von Flüssigkeitsgemischen, Gasgemischen und Flüssigkeits-/ Gasgemischen zurückgegriffen wird und bisweilen sogar ganz auf eine Stofftrennung mit den sich daraus nach wie vor ergebenen hohen Umweltbelastungen verzichtet wird.

Es ist somit Aufgabe der vorliegenden Erfindung eine Vorrichtung der eingangs genannten Art zu schaffen, die einen derartigen Aufbau hat, daß damit die nachteiligen Eigenschaften bekannter Vorrichtungen, wie vorangehend beschrieben, im Rahmen des technisch möglichen beseitigt werden, die Vorrichtung derart realisiert werden kann, daß diese sehr viel kostengünstiger hergestellt werden kann, ohne in bezug auf den erwarteten Reinheitsgrad des Zielmediums gegenüber dem mit bekannten Vorrichtungen erzielbaren Reinheitsgrad des Zielmediums Abstriche machen zu müssen, die auch dem zu trennenden Medium und dem Zielmedium keinerlei Verunreinigungen zuführt, die kostengünstiger bereitstellbar ist und einfacher montierbar und demontierbar ist, dennoch eine so hohe Standzeit wie bisher bekannte Vorrichtungen mit aufwendigem konventionellen Aufbau zeigt und ein erheblich geringeres Gewicht als bisherige Vorrichtungen dieser Art zeigt.

Gelöst wird die Aufgabe gem. der Erfindung dadurch, daß das erste und zweite äußere Endelement abdichtungsfrei im Gehäuse aufgenommen sind, wohingegen das erste und zweite innere Endelement gegenüber der Innenwand des Gehäuses abgedichtet und in diesem aufgenommen sind.

Der Vorteil der erfindungsgemäßen Lösung besteht im wesentlichen darin, daß das erste und zweite äußere Endelement faktisch nur als einfaches scheibenförmiges Element ausgebildet zu sein braucht, d.h. als plattenförmiges Halbzeug bereitgestellt werden kann, das lediglich auf seine geeignete äußere Form, bspw. in Form einer Scheibe mit kreisförmigen Querschnitt durch einen Drehvorgang einen Fräsvorgang oder durch Stanzung gebracht zu werden braucht. Da keine äußere Abdichtung gegenüber der Gehäuseinnenwand und dergleichen erforderlich ist, sind, anders bei im Stand der Technik bekannten Konstruktionen, in denen aufwendige, umlaufende Lippendichtungen vorgesehen werden müssen, die die äußeren Endelemente gegenüber der Innenwand eines i.d.R. im Querschnitt zylinderförmigen Gehäuses vorgesehen werden müssen, nicht erforderlich. Dieses einfache erfindungsgemäße Prinzip gilt prinzipiell für beide Seiten des Abstandselementenstapels, so daß faktisch beide äußeren Endelemente in der Grundversion auf vorbeschriebene Weisen einfach und kostengünstig hergestellt werden können.

Der Vorteil der erfindungsgemäßen Lösung besteht auch darin, daß lediglich die beiden inneren, dem Abstandselementenstapel neben den äußeren Endelementen unmittelbar begrenzenden Endelemente lediglich gegenüber der Innenwand des Gehäuses abdichtbar bzw. abdichtend ausgebildet werden müssen. Bei im Stand der Technik bekannten gattungsgemäßen Konstruktionen sind die Dichtmittel i.d.R. sowohl bei den beiden äußeren Endelementen als auch bei den beiden inneren Endelementen vorhanden und dichten diese gemeinsam gegenüber der Innenwand des Gehäuses ab. Das erschwert zusätzlich die Montage des Abstandselementenstapels einschließlich der inneren und äußeren Endelemente der so gebildeten Einheit schlechthin im Gehäuse als auch die Demontage des Abstandselementenstapels, d.h. das Herausziehen bzw. -führen der gesamten Einheit.

Gem. einer vorteilhaften Ausgestaltung der Erfindung sind die inneren Endelemente aus Kunststoff ausgebildet. Damit unterscheidet sich diese Vorrichtung von allen bekannten Vorrichtungen dieser Art einschließlich der gattungsgemäßen Vorrichtung, bei denen die inneren Endelemente regelmäßig aus rostfreiem, hochwertigen Stahl ausgebildet sind. Die inneren Endelemente aus Kunststoff auszubilden hat den enormen Vorteil, daß regelmäßig die Gestehungskosten von Kunststoff für diese Zwecke gegenüber den Gestehungskosten für Endelemente aus hochwertigem, rostfreien Stahl sehr viel niedriger sind und auch die Bearbeitung des Kunststoffs, um bspw. die inneren Endelemente auf ihre äußere Form zu bringen, sehr viel geringer sind als bei dem vorerwähnten, hochwertigen Stahl.

Ganz besonders vorteilhaft ist es, als Kunststoff Polyoxymethylen POM zu verwenden, wobei Polyoxymethylen den sehr großen Vorteil hat, daß dieser Kunststoff bei geringem Gewicht eine sehr hohe Festigkeit aufweist und aufgrund seiner Neutralität auch gegenüber aggressiven zu trennenden Medien den Reinheitsgrad des mit der Vorrichtung erzeugten Zielprodukts nicht beeinträchtigt. Sowohl im Bereich der Trinkwassererzeugung als auch im Bereich der Lebensmittelerzeugung kann dieser Kunststoff in der erfindungsgemäßen Vorrichtung eingesetzt werden. Zudem sind die Bearbeitungskosten dieses Kunststoffs sehr viel geringer als die Bearbeitungskosten eines aus hochwertigem Stahl hergestellten inneren Endelements, d.h. der Aufwand für die mechanische Bearbeitung durch Drehen, Fräsen, Bohren usw. ist weitaus geringer als bei einer Ausbildung des inneren Endelementes aus hochwertigem Stahl.

Um die Dichtung, die lösbar sein muß, zwischen den inneren Endelementen und der Innenwand des Gehäuses der Vorrichtung auf einfache aber dennoch aber sichere Art auszubilden, ist es vorteilhaft, die inneren Endelemente über ein um das Endelement jeweils herumlaufendes Dichtelement gegenüber der Innenwand des Gehäuses abzudichten, wobei vorzugsweise dazu jeweils umlaufend um die inneren Endelemente eine nutartige Vertiefung vorgesehen ist, in der das jeweilige herumlaufende Dichtelement angeordnet bzw. eingebettet werden kann. Das Dichtelement kann bspw. in Form einer im Querschnitt U-förmigen Lippendichtung ausgebildet sein, die noch um einen in der Lippendichtung angeordneten, umlaufenden Ring in ihrer Andruckwirkung verstärkt werden kann bzw. sicher im Sitz in der umlaufenden Nut gehalten werden kann.

Anders bei den im Stand der Technik bekannten Vorrichtungen einschließlich der gattungsgemäßen Vorrichtung ist vorzugsweise die Zuführung des zu trennenden Mediums, des sog. Feeds, und die Abführung des aufkonzentrierten Mediums, des sog. Retentats, gegenüber dem ersten inneren Endelements mittels eines Dichtelementes abgedichtet. D.h., daß bei der hier beschriebenen erfindungsgemäßen Konstruktion die Dichtung für die Zuführung und die Dichtung für die Abführung im inneren Endelement ausgeführt ist, d.h. das angrenzende äußere Endelement braucht auch für diesen Zweck keine Dichtelemente aufzuweisen, was den eingangs genannten Vorteil der erfindungsgemäßen Konstruktion noch gegenüber bekannten Konstruktionen erhöht, daß nämlich alle Dichtungsmaßnahmen ausschließlich im inneren Endelement vorgesehen zu werden brauchen, wohingegen das angrenzende äußere Endelement auch im Hinblick auf dieses konstruktive Detail lediglich mit einfachen Durchgangslöchern für die Durchführung der Zuführung und der Abführung aufgerüstet zu werden braucht, was die Fertigung des angrenzenden äußeren Endelements erleichtert und die somit preisgünstiger als bisherige Konstruktionen bewerkstelligt werden kann, bei denen die Dichtungen für die Zuführung und die Abführung entweder ausschließlich oder zusätzlich auch im äußeren Endelement vorgesehen worden ist bzw. sind.

Das Dichtelement selbst kann bspw. aus beliebigen geeigneten bzw. geeignet geformten Dichtelementen bestehen, vorzugsweise ist das Dichtelement jedoch ggf. in Form eines O-Ringes aus elastomerem Werkstoff, bspw. Kunststoff oder Gummi, ausgebildet, wobei dieser elastomere Werkstoff ggf. auch noch mit Gewebe verstärkt sein kann.

Gem. einer weiteren vorteilhaften Ausgestaltung der Vorrichtung ist das Dichtelement in einer im wesentlichen um ein im wesentlichen zentral im ersten Endelement angeordnetes Loch umlaufenden Nut aufgenommen, in der bspw. der voraufgeführte 0-Ring als Dichtelement positioniert wird.

Gem. einer noch anderen vorteilhaften Ausgestaltung der Erfindung ist das zweite innere Endelement gegenüber dem zentralen Spannbolzen mittels eines Dichtelementes abgedichtet, wobei auch in diesem Falle vorzugsweise das Dichtelement in Form eines O-Ringes ausgebildet sein kann, es sind aber auch in diesem Falle beliebige geeignete andere Dichtelemente bzw. -formen, bspw. auch Lippendichtungen, möglich, und wobei diese Dichtungen auch in diesem Falle aber aus elastomerem Material, bspw. Gummi oder Kunststoff, ggf. auch mit Gewebe verstärkt, ausgebildet sein können.

Auch hier ist es vorteilhaft, um zu gewährleisten, daß das Dichtelement relativ zum zweiten inneren Endelement, genau, wie oben im Zusammenhang mit dem ersten inneren Endelement beschrieben, sicher fixiert werden kann, das Dichtelement in einer im wesentlichen um eine im wesentlichen zentral im zweiten inneren Endelement angeordnetes Loch umlaufenden Nut, die bspw. im Querschnitt rechteckförmig genau wie die Nut im ersten inneren Endelement ausgebildet wird, aufzunehmen, wodurch auch nicht nur die Dichtwirkung gegenüber dem zentralen Spannbolzen, ggf. unter Zwischenpositionierung einer jeweiligen Aufsteckhülse, gewährleistet ist, sondern auch bei der Montage des Filterelementenstapels und der anschließenden Positionierung der beidseitig inneren Endelemente das Dichtelement aus seiner Anlageposition in den inneren Dichtelementen nicht aufgeschoben wird.

Da, wie vorangehend ausgeführt, die Zuführung und die Abführung dichtend im inneren Endelement aufgenommen sind, dient das jeweils angrenzende äußere Endelement lediglich der Fixierung der Zuführung und der Abführung, obwohl grundsätzlich auch diese Fixierung in dem inneren Endelement konstruktiv vorgesehen werden kann. Bei einer Ausgestaltung, bei der eine Fixierung der Zuführung und der Abführung im inneren Endelement, außer einer Abdichtung, nicht vorgesehen ist, ist es vorteilhaft, die Zuführung und/oder die Abführung am ersten äußeren Endelement lösbar befestigbar auszubilden, was vorzugsweise dadurch auf einfache Weise geschehen kann, daß die Zuführung und die Abführung entsprechend ausgebildete Gewindeansätze aufweist, die in entsprechende Innengewinde des ersten äußeren Endelements eingeschraubt werden können. So ist auch eine einfache Demontage der Zuführung und der Abführung möglich, ohne daß eine Dichtverbindung zerstört bzw. beeinträchtigt wird.

Die Erfindung wird nun unter Bezugnahme auf die nachfolgenden schematischen Zeichnungen anhand eines Ausführungsbeispieles im einzelnen beschrieben. Darin zeigen:
- Fig. 1: im Schnitt den prinzipiellen Aufbau der erfindungsgemäßen Vorrichtung,
- Fig. 2: einen Ausschnitt im Schnitt aus der Fig. 1, insbesondere den Bereich der Dichtung der Zuführung und der Abführung im ersten inneren Endelement, in gegenüber der Fig. 1 vergrößerten Maßstab,
- Fig. 3: einen Ausschnitt im Schnitt aus der Fig. 1, insbesondere das zweite innere und äußere Endelement, in gegenüber der Fig. 1 vergrößertem Maßstab und

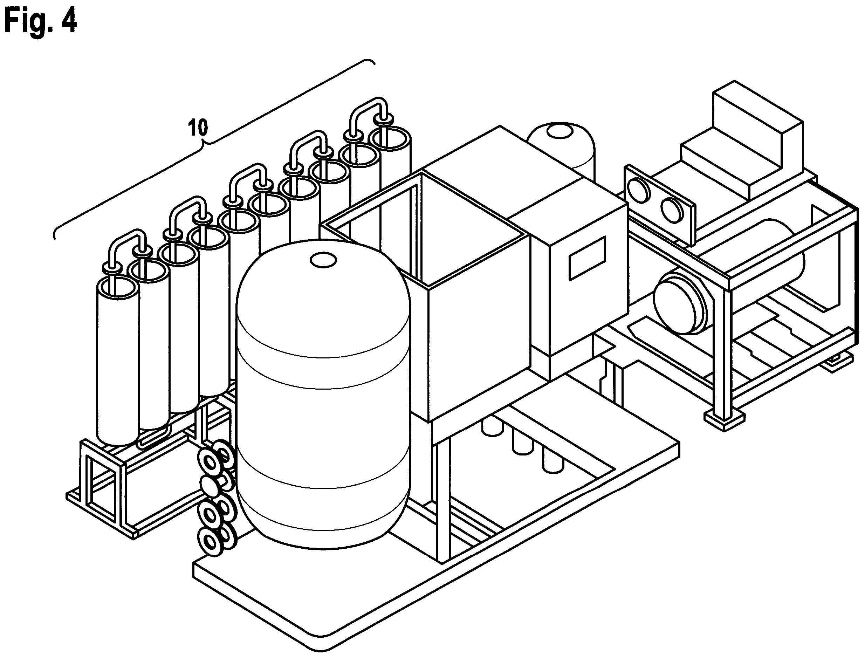

- Fig. 4: sehr schematisch eine Batterie aus einer Mehrzahl von hintereinandergeschalteten Vorrichtungen im Zusammenwirken mit einer Steuerung und Regelung sowie einem Vorrat für Trinkwasser, das mittels mit den Vorrichtungen aus Seewasser hergestellt wird.

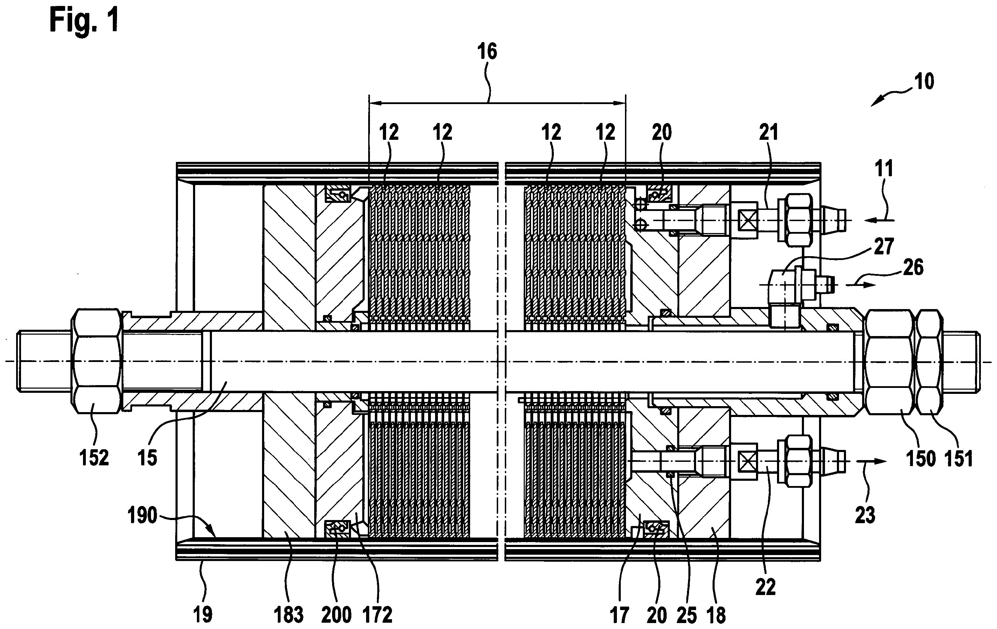

Es wird zunächst auf Fig. 1 Bezug genommen, anhand der der grundsätzliche Aufbau der Vorrichtung 10 gem. der Erfindung beschrieben wird.

Die Vorrichtung 10 umfaßt als zentrales Element eine Einheit, die aus einer Mehrzahl stapelförmig aufeinandergestapelter Abstandselemente 12 besteht, die im wesentlichen scheibenförmig ausgebildet sind. Diese Abstandselemente 12 schließen zwischen sich jeweils ein Filterelement 14 ein, das bspw. in Form eines sog. Membrankissens ausgebildet sein kann. Die Membrankissen weisen auf ihren beiden äußeren flächigen Seiten eine stoffselektive Membranschicht auf, die regelmäßig aus polymeren Werkstoffen bestehen, die an ihren umlaufenden Kanten bzw. ihrer umlaufenden Kante, wenn bspw. diese tellerförmig ausgebildet sind, miteinander verbunden sind, bspw. mittels Ultraschallschweißung. Die Membrankissen weisen regelmäßig ein zentrales Loch auf, aus dem das Permeat, das aus dem zu trennenden Medium bzw. Strömungsmedium 11 mittels der Vorrichtung 10 gewonnen wird, austritt. Dieser Trennmechanismus und der Aufbau eines derartigen Abstandselementenstapels 16 ist bekannt, wobei bspw. ein derartiges Abstandselement in der eingangs genannten EP-B-0 289 740 im einzelnen beispielhaft beschrieben wird. Ein weiteres Eingehen auf den Aufbau der Abstandselemente 12 sowie der regelmäßig als Membrankissen ausgebildeten Filterelemente 14 ist hier somit, da der Fachwelt bekannt, nicht erforderlich.

Das Strömungsmedium 11 durchfließt regelmäßig mäanderförmig den Abstandselementenstapel 16 von einem Einlaß zu einem Auslaß vollständig, wobei dabei das Strömungsmedium 11, über die Abstandselemente 12 geeignet geführt und geleitet, alle Filterelemente 14 des Abstandselementenstapels 16 überströmt bzw. umfließt.

Ein zentraler Spannbolzen 15, von Muttern 15, 150, 151 und 152 geeignet gesichert, hält den Abstandselementenstapel 16, der beidseitig jeweils von einem ersten und einem zweiten inneren Endelement 17, 172 und je einem ersten und einem zweiten äußeren Endelement 18, 183 begrenzt ist, als Einheit zusammen. Mittels des zentralen Spannbolzen 15 sowie der damit zusammenwirkenden Gewindemuttern 150, 151, 152 wird ein geeignet großer Druck auf den Abstandselementenstapel 16 aus Abstandselementen 12 und den dazwischen jeweils eingeschlossenen Filterelementen 14, die um deren zentrale Löcher mittels geeignet ausgebildeten Dichtelementen versehen sind, ein so großer Druck ausgeübt, daß das zu trennende Strömungsmedium 11 zwar mäanderförmig alle Abstandselemente 12 bzw. die Filterelemente 14 des gesamten Abstandselementenstapels 16 umfließen kann, jedoch nicht in das zentrale Loch 13 des Abstandselementes 12, das in der Gesamtheit aller Löcher 13 einen Permeatabflußkanal bildet, gelangen kann.

Auch dieses Prinzip ist der Fachwelt bekannt, so daß ein weiteres Eingehen darauf an dieser Stelle nicht erforderlich ist.

Der Abstandselementenstapel 16 gem. der hier beschriebenen Vorrichtung 10 weist solche erste und zweite äußere Endelemente 18, 183 auf, die hier als einfache Scheiben auf geeignet festen Werkstoffen ausgebildet sind, bspw. aus Stahl, ggf. aber auch aus Kunststoff. Da hier die äußeren beiden Endelemente 18, 183 lediglich krafteinleitende und stützende Wirkung haben, jedoch mit dem zu trennende Strömungsmedium 11 nicht in Berührung kommen, können sie abdichtungsfrei in einem Gehäuse 19 aufgenommen werden, das lediglich als beidseitig offenes Rohr, ggf. sogar als Halbzeug, bereitgestellt zu werden braucht. Die ersten und zweiten äußeren Endelemente 18, 183 können aus beliebigen geeigneten Werkstoffen hergestellt sein, es brauchen keine hochwertigen Stähle oder sonstige Werkstoffe verwendet werden, da diese lediglich die Funktion haben, über die Gewindemuttern 150, 151 und 152 eine geeignet große Kraft auf den Abstandselementenstapels 16 auszuüben.

Die unmittelbar an die äußeren ersten und zweiten Endelemente 18, 183 angrenzenden ersten und zweiten inneren Endelemente 17, 172 weisen jedoch Dichtmittel auf, so daß diese gegenüber der Innenwand 190 des Gehäuses 19 abdichtbar sind, d.h. über diese Dichtmittel ist der gesamte Abstandselementestapel 16 im Gehäuse 19 dichtend aufgenommen.

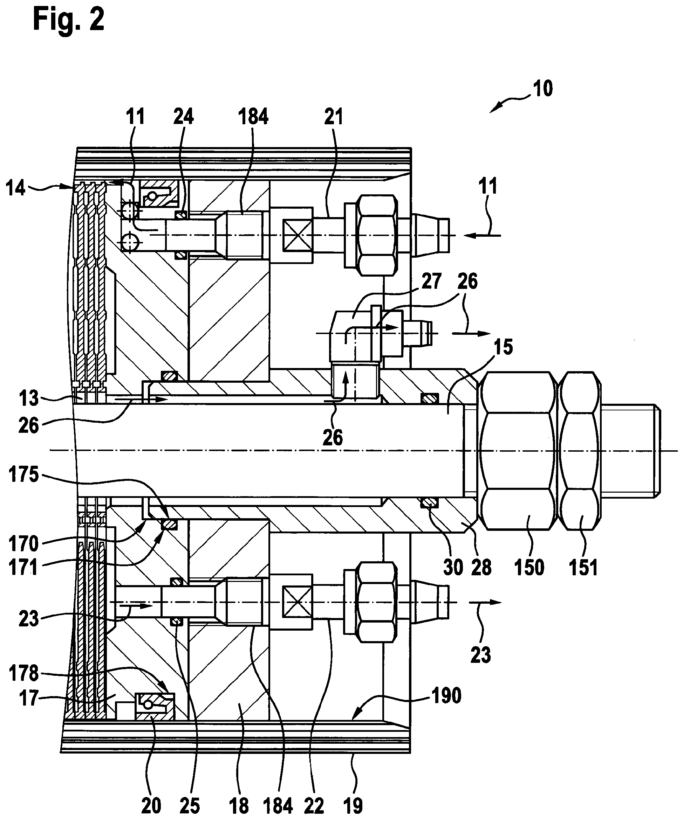

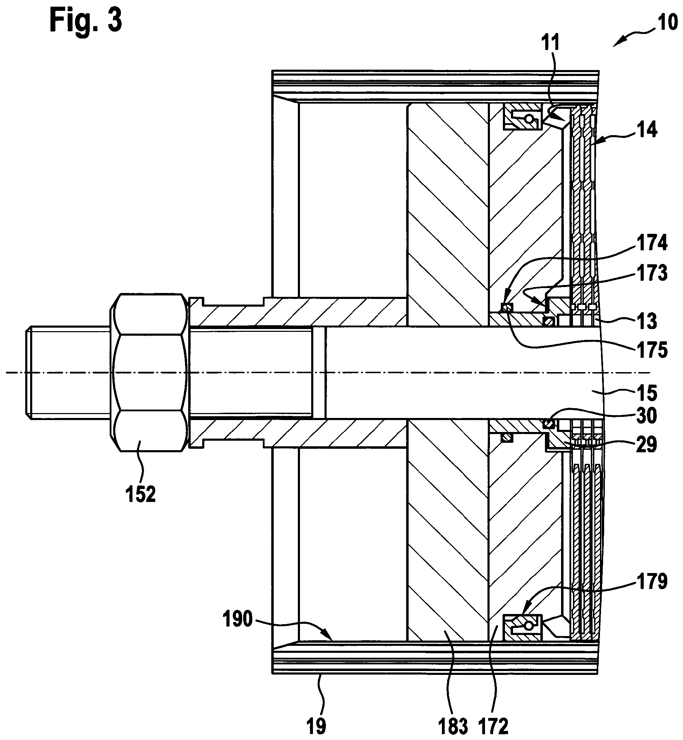

Im Gegensatz zu den äußeren Endelementen 18, 183, vgl. auch die größeren Teildarstellungen gem. Fig. 2 und 3, sind die inneren Endelemente 17, 172 aus Kunststoff, bspw. in Form von Polyoxymethylen POM, ausgebildet. Die inneren Endelemente 17, 172, die ebenfalls als scheibenförmige Elemente ausgebildet sein können. In dem in den Figuren dargestellten Ausführungsbeispiel weist das Gehäuse einen kreisförmigen Querschnitt auf, so daß auch die inneren Endelemente 17, 172 wie die äußeren Elemente 18, 183 eine kreisförmigen Querschnitt aufweisen. Sie sind mit einer radial um die inneren Endelemente 17, 172 herumlaufenden Nut 178, 179 versehen, in denen jeweils als Lippendichtung ausgebildetes Dichtelement 20, 200 angeordnet sind. Die Dichtelemente 20, 200 bilden die Abdichtung gegenüber der Innenwand 190 des Gehäuses 19. Die Dichtelement 20, 200 können U-profilförmig im Querschnitt ausgebildet sein und können mit einem radial umlaufenden Verstärkungsmittel zur Erhöhung der Sitz- und Dichtwirkung der Dichtelemente 20, 200 versehen sein.

Sowohl das erste innere Endelement 17 als auch das zweite innere Endelement 172 weisen jeweils ein im wesentlichen darin zentral ausgebildetes Durchgangsloch 170, 173 auf. Um diese Löcher 170, 173 ist eine Innennut 171, 174 herumlaufend ausgebildet, in der jeweils ein Dichtelement 175 vorgesehen ist. Das Dichtelement 175 ist ebenfalls in Form eines 0-Ringes aus elastomeren Werkstoff, bspw. Gummi oder Kunststoff, ausbildbar, wobei das Dichtelement 175 auch zusätzlich noch gewebe- bzw. faserverstärkt sein kann.

Bei der in den Figuren dargestellten Ausgestaltung der Vorrichtung 10 wirkt das Dichtelement 175 nicht unmittelbar mit dem zentralen Spannbolzen 15 zusammen, sondern über jeweilige zwischen dem ersten und zweiten inneren Endelement 17, 172 angeordnete Buchsen 28, 29, die wiederum über entsprechende, wie die zuvor beschriebenen Dichtelemente 175 ausgebildete Dichtelemente 30 mit dem zentralen Spannbolzen 15 dichtend zusammenwirken. Die hier beschriebene Variante der Dichtung ist allerdings nicht zwingend erforderlich, vereinfacht aber die abgedichtete Ausbildung des Permeatabflußkanals.

Die eigentliche Zuführung 21, die in Form eines Anschlußstutzens für das zu trennend Medium 11, des sog. Feeds, vorgesehen ist, und die Abführung 22, ebenfalls in Form eines Anschlußstutzens ausgebildet, über den das aufkonzentrierte Medium 23, das sog. Retentat, abgeführt wird, sind im ersten inneren Endelement 17 fixiert und druckdicht aufgenommen. Als Dichtung dient eine um die Zuführung 21 bzw. die Abführung 22 in einem entsprechenden Durchgangsloch des inneren Endelements 17, in einer dortigen Nut aufgenommenes Dichtungsmittel bzw. aufgenommene Dichtelemente 24, 25, vgl. insbesondere Fig. 2. Auch diese Dichtelemente 24, 25 können in Form eines O-Ringes ausgebildet sein und aus elastomerem Werkstoff wie Gummi oder Kunststoff, ggf. gewebeverstärkt, ausgebildet sein.

Die Zuführung 21 und die Abführung 22 sind in einem im ersten äußeren Endelement 18 ausgebildeten Loch, das ein Innengewinde 184 aufweist, befestigt, in das entsprechende Außengewinde der Zuführung 21 und Abführung 22 eingreifen. Die im ersten äußeren Endelement 18 ausgebildeten Löcher für die Zuführung und die Abführung 22 fluchten mit den entsprechenden Löchern in den im zusammengebauten Zustand des Abstandselementestapels 16 jeweils benachbart angeordneten Löchern des ersten inneren Endelements 17, so daß die dort ausgebildeten Dichtelemente 24, 25 der Zuführung 21 bzw. der Abführung 22 einen entsprechend ausgebildeten Schaft der Zuführung 21 und der Abführung 22 dichtend umschließen. Die Zuführung 21 und die Abführung 22 kann somit im äußeren Endelement 18 vorkonfektioniert befestigt sein, bevor das derart vorkonfektionierte erste äußere Endelement 18 auf das erste innere Endelement 17 zur Ausbildung des kompletten Abstandselementenstapels 16 zusammengefügt wird.

Wie schon vorangehend angedeutet, wird während der bestimmungsgemäßen Funktion der Vorrichtung 10 das Permeat 26, das regelmäßig das mit der Vorrichtung 10 zu gewinnende Zielprodukt aus dem zugeführten Strömungsmedium 11 ist, in den Löchern 13 aller Abstandselemente 12 gesammelt und parallel zum zentralen Spannbolzen 15 bzw. um diesen herum zu der Abführung 27 geführt und als Permeat 26 aus der Vorrichtung abgeleitet, vgl. insbesondere auch Fig. 2. Das zu trennende Strömungsmedium 11 wird über die Zuführung 21 in die Vorrichtung 10 geleitet und wird zwischen der Innenwand 190 und der äußeren Begrenzung des Abstandselementenstapels 16 zunächst zum Kopf des Abstandselementenstapels 16 geleitet, in der Darstellung von Fig. 1 links, vgl. auch Fig. 3, und tritt dann in dem Abstandselementenstapel 16 auf vorangehend skizzenhaft beschriebene Weise ein und durchläuft den Abstandselementenstapel 16 mäanderförmig und tritt dann als aufkonzentriertes Medium, d.h. als sog. Retentat 23, aus dem Abstandselementenstapel 16 aus und verläßt die Vorrichtung 10 über die Abführung 23.

### Bezugszeichenliste

- 10: Vorrichtung
- 11: Strömungsmedium
- 12: Abstandselement
- 13: Loch / Abstandselement
- 14: Filterelement
- 15: zentraler Spannbolzen
- 150: Mutter
- 151: Mutter
- 152: Mutter
- 16: Abstandselementenstapel
- 17: erstes inneres Endelement
- 170: Loch / erstes inneres Endelement
- 171: Nut / erstes inneres Endelement
- 172: zweites inneres Endelement
- 173: Loch / zweites inneres Endelement
- 174: Nut / zweites inneres Endelement
- 175: Dichtelement / Spannbolzen
- 178: Nut
- 179: Nut
- 18: erstes äußeres Endelement
- 183: zweites äußeres Endelement
- 184: Gewindeverbindung
- 19: Gehäuse
- 190: Innenwand / Gehäuse
- 20: Dichtelement
- 200: Dichtelement
- 21: Zuführung / zu trennendes Medium
- 22: Abführung / aufkonzentriertes Medium
- 23: aufkonzentriertes Medium / Retentat
- 24: Dichtelement / Zuführung
- 25: Dichtelement / Abführung
- 26: Permeat
- 27: Abführung / Permeat
- 28: Buchse

- 29: Buchse
- 30: Dichtelement

## Patentansprüche

1. Vorrichtung (10) zum Filtern und Trennen von Strömungsmedien (11) durch Umkehrosmose und Ultrafiltration, umfassend eine Mehrzahl stapelförmig aufeinandergestapelter Abstandselemente (12), wobei jeweils zwischen den im wesentlichen scheibenförmig ausgebildeten, mit einem zentralen Loch (13) versehenen Abstandselementen (12), die das Strömungsmedium (11) führend leiten und vom Strömungsmedium (11) umflossen werden, ein Filterelement (14) eingeschlossen ist, sowie einen zentralen Spannbolzen (15), der den Abstandselementenstapel (16), der beidseitig jeweils von je einem ersten und einem zweiten, inneren Endelement (17, 172) und je einem ersten und einem zweiten, äußeren Endelement (18, 183) begrenzt ist, als Einheit zusammenhält, wobei die Einheit druckdicht in einem Gehäuse (19) aufgenommen wird, **dadurch gekennzeichnet, dass** das erste und zwei - te, äußere Endelement (18, 183) abdichtungfrei im Gehäuse (19) aufgenommen sind wohingegen das erste und das zweite, innere Endelement (17, 172) gegenüber der Innenwand (190) des Gehäuses (19) abgedichtet in diesem aufgenommen sind.

2. Vorrichtung nach Anspruch 1, wobei die inneren Endelemente (17, 172) aus Kunststoff ausgebildet sind.

3. Vorrichtung nach Anspruch 2, wobei der Kunststoff Polyoxymethylen POM ist.

4. Vorrichtung nach einem oder mehreren der Ansprüche 1 bis 3, wobei die inneren Endelemente (17, 172) über ein um das Endelement (17, 172) jeweils herumlaufendes Dichtelement (20, 200) gegenüber der Innenwand (190) des Gehäuses (19) abgedichtet sind.

5. Vorrichtung nach einem oder mehreren der Ansprüche 1 bis 4, wobei die Zuführung (21) des zu trennenden Mediums (11), des sogenannten Feeds, und die Abführung (22) des aufkonzentrierten Mediums (23), des sogenannten Retentats, gegenüber dem ersten inneren Endelement (17) mittels eines Dichtelementes (24, 25) abgedichtet sind.

6. Vorrichtung nach Anspruch 5, wobei das Dichtelement (24, 25) in Form eines O-Ringes ausgebildet ist.

7. Vorrichtung nach einem oder mehreren der Ansprüche 1 oder 6, wobei ein Dichtelement (175) in einer um ein zentral im ersten inneren Endelement (17) angeordnetes Loch (170) umlaufenden Nut (171) aufgenommen wird.

8. Vorrichtung nach einem oder mehreren der Ansprüche 1 bis 7, wobei das zweite innere Endelement (172) gegenüber dem zentralen Spannbolzen (15) mittels eines Dichtelementes (174) abgedichtet ist.

9. Vorrichtung nach Anspruch 8, wobei das Dichtelement (174) in Form eines 0-Ringes ausgebildet ist.

10. Vorrichtung nach einem oder beiden der Ansprüche 8 oder 9, wobei das Dichtelement (175) in einem um ein zentral im zweiten inneren Endelement (172) angeordnetes Loch (173) umlaufenden Nut (178) aufgenommen wird.

11. Vorrichtung nach einem oder mehreren der Ansprüche 5 bis 10, wobei die Zuführung (21) und/oder die Abführung (22) im ersten äußeren Endelement (18) lösbar befestigbar aufgenommen ist.

12. Vorrichtung nach Anspruch 11, wobei die Zuführung (21) und/oder die Abführung (22) im ersten äußeren Endelement (18) mittels einer Gewindeverbindung (184) aufgenommen ist.

## Claims

1. A device (10) for filtering and separating flow media (11) by means of reverse osmosis and ultrafiltration, comprising a plurality of spacer elements (12) stacked on top of each other in a stack, one filter element (14) being enclosed between each of the substantially disk-shaped spacer elements (12) having a central hole (13) and guiding the flow medium (11) and being surrounded by flowing flow medium (11), and comprising a central clamping bolt (15) holding together as a unit the spacer element stack (16) bounded on both sides by one first and one second inner end element (17, 172) each and one first and one second outer end element (18, 183) each, the unit being received in a housing (19) in a pressure-tight manner, **characterized in that** the first and second outer end element (18, 183) are received in the housing (19) without sealing, whereas the first and the second inner end element (17, 172) are sealed off against the inner wall (190) of the housing (19) and received in said housing.

2. The device according to claim 1, wherein the inner end elements (17, 172) are made of plastic.

3. The device according to claim 2, wherein the plastic is polyoxymethylene POM.

4. The device according to any one or more of the claims 1 through 3, wherein the inner end elements (17, 172) are sealed off against the inner wall (190) of the housing (19) by means of a sealing element (20, 200) running about each end element (17, 172).

5. The device according to any one or more of the claims 1 through 4, wherein the infeed (21) of the medium (11) to be separated, known as the feed, and the discharge (22) of the concentrated medium (23), known as the retentate, are sealed off against the first inner end element (17) by means of a sealing element (24, 25).

6. The device according to claim 5, wherein the sealing element (24, 25) is implemented in the form of an O-ring.

7. The device according to any one or more of the claims 1 or 6, wherein a sealing element (175) is received in a circumferential groove (171) running about a hole (170) disposed centrally in the first inner end element (17).

8. The device according to any one or more of the claims 1 through 7, wherein the second inner end element (172) is sealed off against the central clamping bolt (15) by means of a sealing element (174).

9. The device according to claim 8, wherein the sealing element (174) is implemented in the form of an O-ring.

10. The device according to any one or both of the claims 8 or 9, wherein the sealing element (175) is received in a circumferential groove (178) running about a hole (173) disposed centrally in the second inner end element (172).

11. The device according to any one or more of the claims 5 through 10, wherein the infeed (21) and/or the discharge (22) is releasably attachably received in the first outer end element (18).

12. The device according to claim 11, wherein the infeed (21) and/or the discharge (22) is received in the first outer end element (18) by means of a threaded connection (184).

## Revendications

1. Dispositif (10) pour filtrer et séparer des fluides en écoulement (11) par osmose inverse et ultrafiltration, comprenant une pluralité d'éléments d'espacement (12) empilés les uns sur les autres en forme de pile, un élément filtrant (14) étant inclus à chaque fois entre les éléments d'espacement (12) sensiblement en forme de disque et pourvus d'un trou central (13), qui conduisent, en le guidant, le fluide en écoulement (11) et sont baignés par le fluide en écoulement (11), ainsi qu'un boulon de serrage central (15) qui maintient en tant qu'unité la pile d'éléments d'espacement (16) délimitée respectivement, sur chacun des deux côtés, par un premier et un deuxième éléments d'extrémité intérieurs (17, 172) et par un premier et un deuxième éléments d'extrémité extérieurs (18, 183), l'unité étant reçue de manière étanche à la pression dans un boîtier (19), **caractérisé en ce que** les premier et deuxième éléments d'extrémité extérieurs (18, 183) sont reçus sans élément d'étanchéité dans le boîtier (19), tandis que les premier et deuxième éléments d'extrémité intérieurs (17, 172) sont reçus dans le boîtier (19) de manière étanche par rapport à la paroi intérieure (190) de celui-ci.

2. Dispositif selon la revendication 1, les éléments d'extrémité intérieurs (17, 172) étant réalisés en matière plastique.

3. Dispositif selon la revendication 2, la matière plastique étant du polyoxyméthylène POM.

4. Dispositif selon l'une ou plusieurs des revendications 1 à 3, les éléments d'extrémité intérieurs (17, 172) étant chacun étanchés par rapport à la paroi intérieure (190) du boîtier (19) par l'intermédiaire d'un élément d'étanchéité (20, 200) s'étendant autour de l'élément d'extrémité (17, 172).

5. Dispositif selon l'une ou plusieurs des revendications 1 à 4, l'amenée (21) du fluide à séparer (11), dit feed, et l'évacuation (22) du fluide concentré (23), dit rétentat, étant étanchées par rapport au premier élément d'extrémité intérieur (17) au moyen d'un élément d'étanchéité (24, 25).

6. Dispositif selon la revendication 5, l'élément d'étanchéité (24, 25) étant réalisé sous la forme d'un joint torique.

7. Dispositif selon l'une ou plusieurs des revendications 1 et 6, un élément d'étanchéité (175) étant reçu dans une rainure (171) s'étendant autour d'un trou (170) disposé au centre du premier élément d'extrémité intérieur (17).

8. Dispositif selon l'une ou plusieurs des revendications 1 à 7, le deuxième élément d'extrémité intérieur (172) étant étanché par rapport au boulon de serrage central (15) au moyen d'un élément d'étanchéité (174).

9. Dispositif selon la revendication 8, l'élément d'étanchéité (174) étant réalisé sous la forme d'un joint torique.

10. Dispositif selon l'une des deux ou les deux revendications 8 et 9, l'élément d'étanchéité (175) étant reçu dans une rainure (178) s'étendant autour d'un trou (173) disposé au centre du deuxième élément d'extrémité intérieur (172).

11. Dispositif selon l'une ou plusieurs des revendications 5 à 10, l'amenée (21) et/ou l'évacuation (22) étant reçue(s) dans le premier élément d'extrémité extérieur (18) de manière à pouvoir être fixée(s) de façon amovible.

12. Dispositif selon la revendication 11, l'amenée (21) et/ou l'évacuation (22) étant reçue(s) dans le premier élément d'extrémité extérieur (18) au moyen d'un raccord vissé (184).
